# EUROPEAN PATENT SPECIFICATION

(11) **EP 2 368 724 B1**
(45) Date of publication and mention of the grant of the patent: **11.07.2012**
(21) Application number: 11157349.9
(22) Date of filing: 08.03.2011
(51) Int. Cl.: B60C 11/24, B60C 23/04

(54) **Tire wear detection device**
Reifenverschleisserkennungsvorrichtung
Dispositif de détection d'usure de pneu

(30) Priority: 12.03.2010 JP 2010056172
(43) Date of publication of application: 28.09.2011
(73) Proprietor: Pacific Industrial Co., Ltd., GIFU-KEN 503-8603 (JP)
(72) Inventor: Katou, Michiya c/o PACIFIC INDUSTRIAL CO., LTD., Gifu-ken 503-8603 (JP)
(74) Representative: Löfgren, Håkan Bengt Alpo

(56) References cited:
- DE-A1-102007 053 153
- JP-A- 2005 170 223
- US-A1- 2006 195 233

## Description

### BACKGROUND OF THE INVENTION

The present invention relates to a tire wear detection device that detects the wear state of a tire.

In the prior art, various types of devices used as tire wear detection devices have been developed to detect the wear state of a tire (specifically, tire tread). Japanese Laid-Open Patent Publication No 2005-170223 describes an example of a detection device including a sensor and a communication unit, which are arranged in a tread groove of a tire. When the vehicle is traveling, the detection device uses the sensor to detect deformation of the tread when the tread comes in contact with the road surface and transmits a detection signal from the sensor to a receiver, which is installed on the vehicle body. Then, an electronic control unit, which is also installed on the vehicle body, determines the wear state and the like of the tread based on the detection signal received by the receiver. This publication also describes that a battery may be embedded in a tire or arranged on a wheel to supply the detection device with power. Further, the publication describes that a coil-shaped antenna may be arranged in the detection device so that the receiver induces electromotive force from the electromagnetic induction effect of the coil-shaped antenna and obtains the power required to drive the detection device.

Japanese Laid-Open Patent Publication No. 2007-40705 describes a radio device arranged in a tread groove of a tire or inside the tread. A data reader is arranged on the vehicle body near the tire to read data signals transmitted from the radio device. The radio device implements radio-frequency identification (RFID). When the radio device moves to a position facing toward the data reader as the tire rotates, the data reader is fed with power through wireless communication to induce electromotive force at the radio device. This obtains the power required to drive the radio device and transmit the data signals from the radio device. When the vehicle is traveling, the data reader determines that wear of the tread has not exceeded the tolerable limit as long as data signals are received in predetermined cycles from the radio device. In contrast, when wear of the tread advances and breaks the radio device, the data receiver cannot receive the data signals. In such a case, when the vehicle is traveling and the data signals cannot be received in predetermined cycles from the radio device, the data reader determines that wear of the tread has exceeded the tolerable limit

Japanese Laid-Open Patent Publication No. 2007-8249 describes a tire pressure monitoring device. This device includes a linear antenna, which is embedded in the tread of a tire, and a sensor unit, which is arranged on the wheel to detect the air pressure of the tire and transmits a detection signal from the antenna. A receiver is arranged on the vehicle body to receive the detection signal from the sensor unit. The antenna has a distal end that becomes exposed from the surface of the tread as wear of the tread advances. The distal end of the antenna wears as the tread wears. As a result, the antenna is gradually shortened as wear of the tread advances. This gradually lowers the radio wave intensity of the detection signal transmitted from the antenna. When the radio wave intensity of the received detection signal decreases to a predetermined level, the receiver determines that wear of the tread has exceeded the tolerable limit.

The detection device of Japanese Laid-Open Patent Publication No. 2005-170223, which is extremely small so that it can be arranged in a tread groove of the tire, transmits detection signals to the receiver on the vehicle body, However, due to the small size of the detection signal, the radio wave intensity of the transmitted signals is weak. In addition, when the vehicle is traveling, the positional relation of the detection device, which is arranged in the rotating tire, relative to the receiver, which is arranged on the vehicle body, is always changing. Moreover, the vehicle body is formed from metal, which adversely affects the communication environment. It is thus difficult to ensure that the receiver receives signals from the small detection device.

To increase the radio wave intensity, the detection device must be enlarged or the power supply to the detection device must be increased. However, the detection device cannot be enlarged since it is has to be arranged in the tread groove. Further, a relatively large battery is required to increase the power supplied to the detection device and to ensure the required operational life. However, the embedment of such a large battery in the tire is not practical. A large battery can be arranged on a wheel. However, in such a case, the battery would have to be arranged on the wheel in a state separated from the detection device. This would result in difficult wiring of the detection device, which is arranged in the tread groove, and the battery, which is arranged on the wheel.

In the detection device of Japanese Laid-Open Patent Publication No. 2005-170223, when the detection device uses the electromagnetic induction effect to obtain power, the battery is unnecessary. However, it is difficult for such a very small detection device arranged in a tread groove to obtain sufficient power through the electromagnetic induction effect. Further, the arrangement of the receiver, which is used only for tire wear detection, on the vehicle body is not cost-efficient.

In Japanese Laid-Open Patent Publication No. 2007-40705, the data reader is arranged on the vehicle body near the tire. Further, the radio device is arranged in the tread. As the tire rotates, the radio device is fed with power through wireless communication when moved to the position facing the data reader to transmit data signals. Thus, the radio device and the data reader are relatively close to each other when they communicate. However, as described in relation with Japanese Laid-Open Patent Publication No. 2005-170223, the radio and the data reader communicate with each other in a poor communication environment. Thus, even though the radio device and the data reader are relatively close to each other when they communicate, the power fed through wireless communication and obtained by the very small radio device in the tread cannot realize a radio wave intensity that is sufficient for ensuring communication. Further, the arrangement of the data reader on the vehicle body only for tire wear detection is not cost-efficient.

The tire pressure monitoring device of Japanese Laid-Open Patent Publication No. 2007-8249 includes the sensor unit, which is arranged on the wheel and generally includes a relatively large battery. The device transmits a high frequency signal (RF signal) of which radio wave intensity and communication distance are sufficient. However, even though the antenna is shortened as tread wear advances, the decrease in radio wave intensity is subtle. This makes it difficult to correctly determine the wear state of the tire based on the decrease in the radio wave intensity of the detection signal received by the receiver. Further, it is difficult to arrange the linear antenna in the tire tread and wire the antenna and the sensor unit, which is installed on the wheel, in the tire.

DE 10 2007 053153 A1 discloses a vehicle tire having a sensor for monitoring tread depth. The sensor is coupled to activating means for indicating the condition of the tread depth.

US 20061195233 A1 discloses a vehicle wheel information processing device, a wheel side sensor provided in a valve of a wheel, and a tire side sensor embedded in a tire tread.

### SUMMARY OF THE INVENTION

It is an object of the present invention to provide a low cost tire wear detection device that has a simple structure and obtains superior reliability with regard to tire wear detection. The above-mentioned object is attained by a tire wear detection device as defined in the appended claim 1.

To achieve the above object, one aspect of the present invention provides a tire wear detection device including a wear detector that detects wear of a tread of a tire, which is fitted to a wheel of a vehicle. The wear detector is embedded in the tread and includes a piezoelectric element, which generates a voltage signal in correspondence with an external impact, and a signal generator, which generates a radio wave signal from the voltage signal generated by the piezoelectric element A sensor unit is arranged on the wheel, The sensor unit incudes a pressure sensor, which detects an internal air pressure of the tire, a reception unit, which receives the radio wave signal generated by the signal generator, and a transmission unit, which transmits through wireless communication a pressure data signal indicating the internal air pressure detected by the pressure sensor, generates a wear data signal indicating a wear state of the tire based on the radio wave signal received by the reception unit, and transmits through wireless communication the wear data signal. A receiver unit receives the pressure data signal and the wear data signal from the sensor unit. The receiver unit is arranged on a body of the vehicle.

With the above structure, in the wear detector, the impact the piezoelectric element receives from the road surface increases as the wear of the tread advances. This raises the level of the voyage signal generated by the piezoelectric element. Thus, the level (intensity) of the radio wave signal generated by the signal generator is also increased. The sensor unit which is arranged on the wheel, generates a wear data signal indicating the intensity of the radio wave signal based on the received radio wave signal, This allows for the receiver unit to determine the wear state of the tire based on the received wear data signal.

In the present invention, when the wear detector, which includes the piezoelectric element, receives an impact, the impact generates the power required to drive the wear detector. Thus, the wear detector does not need a power supply such as a battery and does not need a configuration for obtaining power through the electromagnetic induction effect. As a result, the wear detector has a simple and compact structure. This facilitates embedment of the wear detector in the tread.

Further, in the present invention, the sensor unit in the tire pressure monitoring device is used as a relay for transmitting the signal generated by the wear detector to the receiver unit, which is arranged on the vehicle body, The positional relationship of the sensor unit, which is arranged on the wheel, relative to the wear detector, which is arranged in the tread, is constant. Further, the sensor unit may be arranged near the wear detector. This ensures that the radio signal generated by the wear detector is received by the sensor unit even when the intensity of the radio wave signal is weak.

In addition, the battery for the sensor unit, which is arranged on the wheel, may be relatively large. This allows for the sensor unit to be configured to transmit a signal having a sufficient radio wave intensity and communication distance. This ensures that the wear data signal transmitted from the sensor unit is received by the receiver unit, which is arranged on the vehicle body.

Moreover, the sensor unit and the receiver unit forming the tire pressure monitoring device, which has become popularly used in vehicles, also function as elements of the tire wear detection device. Thus, just the wear detector that is embedded in the tread needs to be added to detect the wear state of the tread, This simplifies and minimizes the cost of the tire wear detection device.

In the present invention, preferably, the signal generator includes a resonance circuit that acquires a first signal having a first frequency as the radio wave signal from the voltage signal generated by the piezoelectric element, and the transmission unit generates a second signal having a second frequency differing from the first frequency based on the radio wave signal and transmits the second signal as the wear data signal.

The wear detector has a simple structure and is inexpensive since it is formed by standard components such as the piezoelectric element and the resonance circuit. Further, the signal transmitted from the transmission circuit of the sensor unit has a frequency that differs from the frequency of the radio wave signal generated by the wear detector Thus, the signal transmitted from the transmission unit is a signal having a frequency that allows for the stable reception by the receiver unit, which is arranged on the vehicle body, regardless of the frequency of the radio wave signal generated by the wear detector. For example, when a signal transmuted from the transmission unit of the sensor unit is a high frequency signal that can be stably communicated over a relatively long distance, the reliability of communication between the sensor unit and the receiver unit is improved.

In the present invention, preferably, the wear detector includes a detection piece mechanically coupled to the piezoelectric element, and the wear detector is embedded in the tread so that a distal end of the detection piece becomes exposed from an outer surface of the tread when the tread is worn to a tolerable limit.

With the above structure, when the distal end of the detection piece is exposed from the outer surface of the tread, the impact the distal end of the detection piece receives from the road surface greatly increases and the intensity of the radio wave signal generated by the wear detector also greatly increases as compared to when the distal end is unexposed, This allows for the receiver unit to accurately determine that the tread has worn to the tolerable limit based on significant changes in the radio wave intensity.

In the present invention, preferably, the receiver unit includes a transmission unit that transmits a start signal to the reception unit of the sensor unit, and the sensor unit switches to a wear detection mode, which permits the transmission of the wear data signal, in response to the start signal received by the reception unit.

With the above structure, based on a command from the receiver unit, which is arranged on the vehicle body, the sensor unit may be switched between the wear detection mode and another operational mode (e.g., pressure detection mode).

In the present invention, preferably, the receiver unit transmits the start signal from the transmission unit so that the sensor unit operates in the wear detection mode when the vehicle is traveling in a predetermined speed range.

With the above structure, the wear state of the tread may be detected when the traveling speed of the vehicle is within a speed range allowing for correct detection.

In the present invention, preferably, the wear detector is one of a plurality of wear detectors arranged at predetermined intervals along a circumferential direction of the tire,

With the above structure, the plurality of wear detectors detect the wear state of the tread with further accuracy. Further, the receiver unit may determine whether or not the received signal is a correct wear data signal based on the reception cycle of the signal (e.g., reception pattern of the signals for each rotation of the tire).

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram of a vehicle including a tire wear detection device according to one embodiment of the present invention;
Fig. 2 is a cross-sectional view showing a tire and a wheel including a wear detector and a sensor unit of Fig. 1;
Fig. 3 is a block diagram showing a circuit configuration of the wear detector of Fig. 2;
Fig. 4 is a block diagram showing a circuit configuration of the sensor unit of Fig. 2; and
Fig. 5 is a perspective cross-sectional view showing the arrangement of a wear detector according to another embodiment of the present invention.

### DETAILED DESCRIPTION OF THE INVENTION

One embodiment of the present invention will now be discussed with reference to the drawings

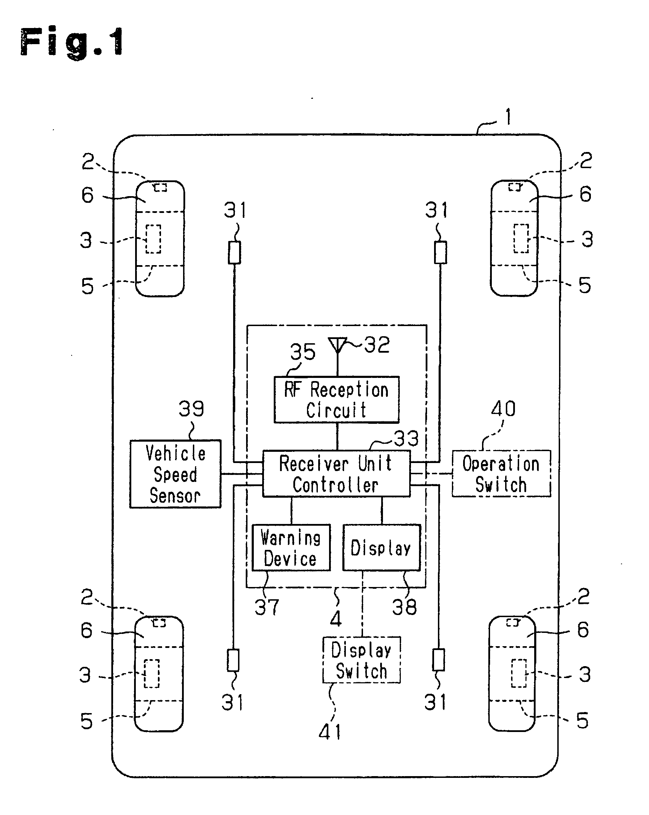

Fig. 1 shows a vehicle 1 including a tire wear detection device. The tire wear detection device includes four wear detectors 2 respectively attached to four tires 6 of the vehicle 1, four sensor units 3 respectively attached to four wheels 5 of the vehicle 1, and a receiver unit 4 arranged on a vehicle body of the vehicle 1, The sensor unit 3 and the receiver unit 4 form a tire pressure monitoring device.

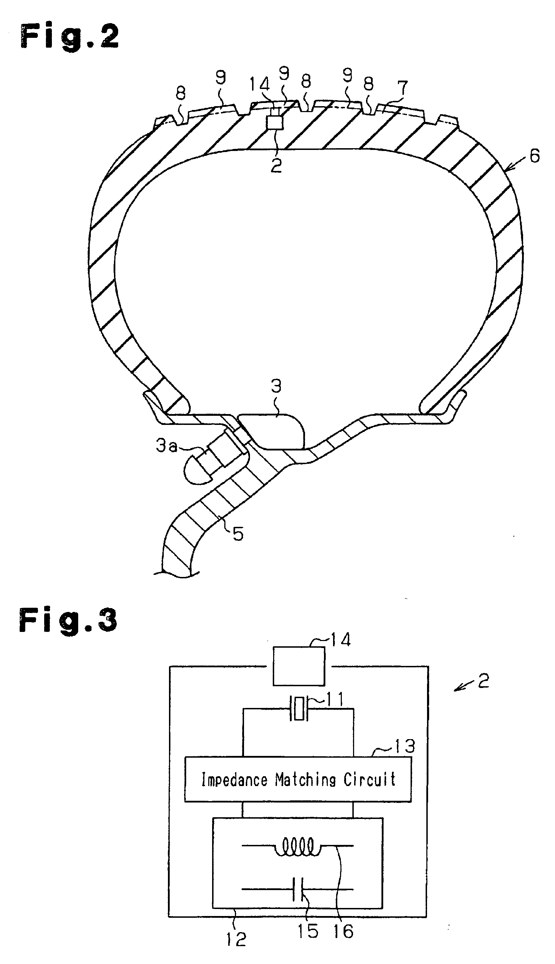

As shown in Fig. 2, each wear detector 2 is embedded in a tread 7 of the corresponding tire 6. specifically, in one of blocks 9, which are separated by tread grooves 8. As shown in Fig. 3, each wear detector 2 includes a piezoelectric element 11, a resonance circuit 12 serving as a signal generator, and an impedance matching circuit 13. The piezoelectric element 11 generates a voltage signal in accordance with the impact received from the outside. The resonance circuit 12, which includes a capacitor 15 and a coil 16, generates a radio wave signa! from the voltage signal of the piezoelectric element 11. The coil 16 functions as an antenna that transmits the radio wave signal. The impedance matching circuit 13 matches the impedances of the piezoelectric element 11 and the resonance circuit 12.

As shown in Figs. 2 and 3, the wear detector 2 also includes a detection piece 14, which is mechanically coupled to the piezoelectric element 11. The detection piece 14 is formed from, for example, a metal material, The wear detector 2 is embedded in the tread 7 so that a distal end of the detection piece 14 faces toward the outer surface of the tread 7 and becomes exposed from the outer surface of the tread 7 when the tread 7 is worn to the tolerable limit (the position indicated by a broken line in Fig. 2). When the vehicle 1 is traveling and the portion of the tread 7 corresponding to the wear detector 2 comes into contact with the road surface, the piezoelectric element 11 receives an impact from the road surface through the detection piece 14. In correspondence with the magnitude of the impact, the piezoelectric element 11 generates a voltage signal. The voltage signal includes various frequency components. As wear of the tread 7 advances, the thickness of the tire rubber between the outer surface of the tread 7 and the distal end of the detection piece 14 gradually decreases. This increases the impact that the piezoelectric element 11 receives from the road surface and raises the level of the voltage signal generated by the piezoelectric element 11. Thus, the level (intensity) of the radio wave signal generated by the resonance circuit 12 also increases.

The resonance circuit 12 acquires an LF signal (longwave band signal) having a predetermined frequency (e.g., 125 kHz) from the voltage signal, which is generated by the piezoelectric element 11 and includes various frequency components. Then, the resonance circuit 12 transmits the LF signal as the radio wave signal. The LF signal acquired by the resonance circuit 12 may be changed to any frequency as long as it is in the range of the LF (longwave) band (i.e., 30 to 300 kHz) that is generally used in the field of communications.

As shown in Figs. 1 and 2, each sensor unit 3 is fixed to the corresponding wheel 5, around which the tire 6 is fitted, and thus arranged inside the tire 6. The sensor unit 3 is integrated with a tire valve 3a. The sensor unit 3 detects the state of the corresponding tire 6 (internal air pressure, internal temperature, and the like) and transmits, through wireless communication, a signal containing data indicating the detected tire state, namely, tire state data signal, The wear detector 2 is substantially aligned with the sensor unit 3 in a radial direction. Therefore, the angular positions of the sensor unit and the detector about the axis of the wheel are substantially the same, and the distance between the sensor unit 3 and the detector 2 is minimized.

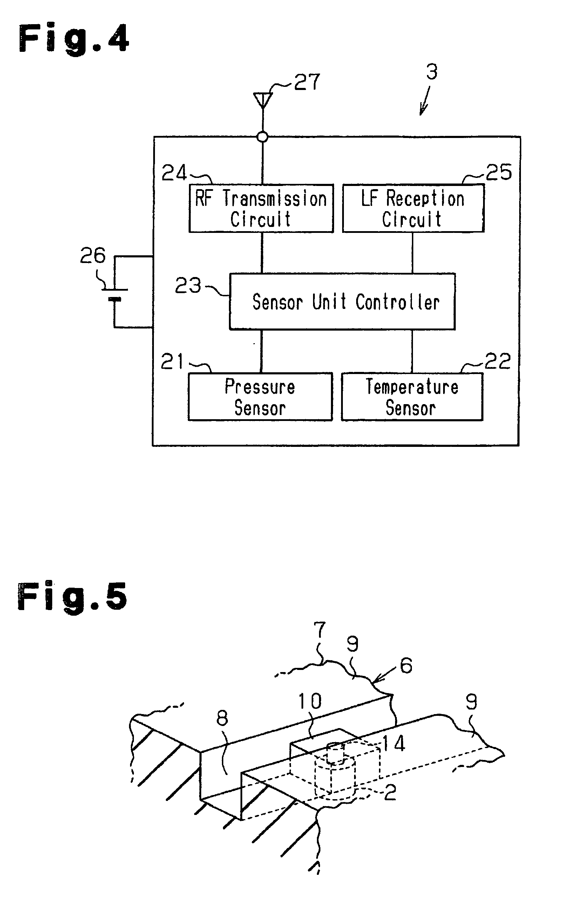

As shown in Fig. 4, each sensor unit 3 includes a pressure sensor 21, a temperature sensor 22, a sensor unit controller 23, an RF transmission circuit 24 serving as a transmission unit, an LF reception circuit 25 serving as a reception unit, and an antenna 27. The sensor unit 3 is operated by the power supplied from a battery 26 of the sensor unit 3.

The pressure sensor 21 measures the internal air pressure of the corresponding tire 6 and sends air pressure data obtained from the measurement to the sensor unit controller 23. The temperature sensor 22 measures the internal temperature of the corresponding tire 6 and sends temperature data obtained from the measurement to the sensor unit controller 23. The sensor unit controller 23 is formed by a microcomputer or the like that includes a CPU, a RAM, and a ROM. An identification (ID) code, which is unique identification information, is registered in the ROM. The ID code is information used by the receiver unit 4 to identify the sensor unit 3.

The sensor unit controller 23 generates the tire state data signal, which includes the air pressure data, the temperature data, and the ID code, Then, the sensor unit controller 23 sends the tire state data signal to the RF transmission circuit 24. The RF transmission circuit 24 modulates the tire state data signal from the sensor unit controller 23 to an RF signal (high frequency signal) having a predetermined carrier frequency. Then, the RF transmission circuit 24 transmits the RF signal from the antenna 27 through wireless communication. The RF transmission circuit 24 is configured to modulate the tire state data signal to the RF signal having the carrier frequency of 315 MHz using the frequency-shift keying (FSK) scheme The carrier frequency can be changed within the range of the VHF and UHF bands (e.g., 30 M to 3 GHz) generally used in the field of communicates

The LF reception circuit 25 receives the radio wave signal (LF signal) from the resonance circuit 12 of the wear detector 2 and sends the radio wave signal to the sensor unit controller 23. When receiving the radio wave signal, the sensor unit controller 23, which functions as part of the transmission unit, generates a wear data signal, which indicates the wear state of the tire 6 (i.e., tread 7), based on the radio wave signal and sends the wear data signal to the RF transmission circuit 24. The wear data signal includes information related to the intensity of the received radio wave signal as information indicating the wear state (extent of wear) of the tread 7. The wear data signal also includes the ID code of the sensor unit 3. The RF transmission circuit 24 modulates the wear data signal from the sensor unit controller 23 to an RF signal having a predetermined carrier frequency in the same manner as the tire state data signal, Then, the RF transmission circuit 24 transmits the RF signal from the antenna 27 through wireless communication.

The LF reception circuit 25 receives an LF signal (e.g., command signal described below) from the receiver unit 4 and sends the command signal to the sensor unit controller 23. The sensor unit controller 23 has the sensor unit 3 perform an operation corresponding to the command contents of the command signal in response to the command signal received from the receiver unit 4. Specifically, the command signal transmitted from the receiver unit 4 includes a start signal and a stop signal. In response to the start signal receded from the receiver unit 4, the sensor unit controller 23 switches the operation mode of the sensor unit 3 from a pressure detection mode, which transmits the tire state data signal, to a wear detection mode, which transmits the wear data signal. In response to the stop signal received from the receiver unit 4, the sensor unit controller 23 switches the operation mode of the sensor unit 3 from the wear detection mode to the pressure detection mode. In this manner, the sensor unit controller 23 switches the operation mode of the sensor unit 3 in response to the command signal received from the receiver unit 4.

When switched to the pressure detection mode, each sensor unit 3 cyclical transmits the tire state data signal in predetermined time intervals (e.g., one minute intervals). However, when the measured tire state indicates an abnormality (e.g., abnormal decrease in the internal pressure of the tire 6, sudden change in the internal pressure of the tire 6, and so on), the sensor unit 3 immediately transmits the tire state data signal irrespective of the cyclic transmission. When switched to the wear detection mode, each sensor unit 3 wirelessly transmits the wear data signal whenever the sensor unit receives a radio wave signal from the wear detector 2.

As shown in Fig. 1, the receiver unit 4 is arranged at a predetermined location on the vehicle body and powered by a battery (not shown) of the vehicle 1. The receiver unit 4 includes four LF transmission circuits 31, which serve as transmission units, and at least one antenna 32, The LF transmission circuits 31 are each arranged on the vehicle body near the corresponding wheel 5. The receiver unit 4 also includes a receiver unit controller 33, an RF reception circuit 35, a warning device 37, and a display 38. The receiver unit controller 33 is formed by a microcomputer, which includes a CPU. a ROM, and a RAM, The receiver unit controller 33 generates the command signal (start signal and stop signal) and sends the command signal to each LF transmission circuit 31. Each LF transmission circuit 31 transmits the command signal to the corresponding sensor unit 3.

The RF reception circuit 35 demodulates the RF signal (tire state data signal and wear data signal) received from each sensor unit 3 by the antenna 32. Then, the RF reception circuit 35 sends the demodulated RF signal to the receiver unit controller 33, Based on the tire state data signal from the RF reception circuit 35, the receiver unit controller 33 recognizes the internal air pressure and the internal temperature of the tire 6 corresponding to the sensor unit 3 that originated the transmission. Based on the wear data signal from the RF reception circuit 35, the receiver unit controller 33 determines the intensity of the radio wave signal. Then, based on the determination, the receiver unit controller 33 recognizes the wear state of the tire 6 corresponding to the sensor unit 3 that originated the transmission.

The receiver unit controller 33 also uses the display 38 to show the information related to the internal air pressure and internal temperature, the information related to the wear state, and the like. The display 38 is arranged within a visual range of the vehicle occupant such as in the passenger compartment. The receiver unit controller 33 uses the warning device 37 (notification device) to issue a notification of an abnormality in the internal air pressure and the internal temperature. The receiver unit controller 33 also uses the warning device 37 (notification device) to issue a notification that the tread 7 is worn to the tolerable limit. A device that issues a notification of an abnormally using noise or light may be used as the warning device 37. The display 38 may serve as the notification unit to show that there is an abnormality in the internal air pressure, that the internal temperature is abnormal, or that the tread 7 is worn to the tolerable limit.

A vehicle speed sensor 39, which detects the traveling speed of the vehicle 1, is connected to the receiver unit controller 33. The receiver unit controller 33 recognizes the traveling speed of the vehicle 1 based on the detection signal from the vehicle speed sensor 39. When the vehicle 1 is traveling in a predetermined speed range (specifically, a low speed range), the receiver unit controller 33 transmits the command signal (start signal and stop signal) from each LF transmission circuit 31 so that the corresponding sensor unit 3 operates in the wear detection mode. For example, during acceleration of the vehicle 1, each LF transmission circuit 31 transmits the start signal when the traveling speed reaches the lower limit value (e.g., 10 km/h), and each LF transmission circuit 31 transmits the stop signal when the traveling speed becomes higher than the upper limit value (e.g., 30 km/h). During deceleration of the vehicle 1, each LF transmission circuit 31 transmits the start signal when the traveling speed becomes lower than the upper limit value, and each LF transmission circuit 31 transmits the stop signal when the traveling speed becomes lower than the lower limit value.

Alternatively, during acceleration of the vehicle 1, each LF transmission circuit 31 may transmit the start signal when the traveling speed reaches the lower limit value, and each LF transmission circuit 31 may transmit the stop signal after a predetermined time (e.g., about 10 seconds) elapses from the transmission of the start signal. During deceleration of the vehicle 1, each LF transmission circuit 31 may transmit the start signal when the traveling speed becomes lower than the upper limit value, and each LF transmission circuit 31 may transmit the stop signal after a predetermined time elapses from the transmission of the start signal. Instead of transmitting the stop signal, each sensor unit 3 may automatically return to the pressure detection mode after a predetermined time elapses from the when the start signal is received.

The above-discussed tire wear detection device has the advantages described below.
(1) Each sensor unit 3 operates in the wear detection mode when the vehicle 1 is traveling in a predetermined low speed range. In this case, in each wear detector 2, the impact the piezoelectric element 11 receives from the road surface increases as the wear of the tread 7 advances. This raises the level of the voltage signal generated by the piezoelectric element 11. Thus, the intensity of the radio wave signal generated by the resonance circuit 12 is also increased. Each sensor unit 3 generates a wear data signal indicating the intensity of the radio wave signal (i.e., wear state of the tread 7) based on the received radio wave signal. Then, the sensor unit 3 transmits the wear data signal to the receiver unit 4 through wireless communication. Based on the received wear data signal, the receiver unit 4 determines the wear state of the corresponding tread 7. The vehicle occupant refers to the wear state information shown on the display 38 or the notification made by the warning device 37 and recognizes whether or not the wear state of the tread 7, namely, the extent of wear of the tread 7, is close to or has reached the tolerable limit.
(2) When the wear detector 2, which includes the piezoelectric element 11, receives an impact, the impact generates the power required to drive the wear detector 2. Thus, the wear detector 2 does not need a power supply such as a battery and does not need a configuration for obtaining power through the electromagnetic induction effect. As a result, the wear detector 2 has a simple and compact structure. This facilitates embedment of the wear detector 2 in the tread 7.
(3) The sensor units 3 in the tire pressure monitoring device are used as relays for transmitting the signals generated by the corresponding wear detectors 2 to the receiver unit 4, which is arranged on the vehicle body. The positional relationship of each sensor unit 3, which is arranged on the wheel 5, relative to the corresponding wear detector 2, which is arranged in the tread 7, is constant. Further, the sensor unit 3 is arranged near the wear detector 2. in the present embodiment, in particular, the wear detector 2 is arranged at a position substantially aligned with the sensor unit 3 in a radial direction of the tire 6. This ensures that the radio signal generated by the wear detector 2 is received by the sensor unit 3 even when the intensity of the radio wave signal is weak.
   The battery 26 for the sensor unit 3, which is arranged on the wheel 5, may be relatively large. This allows for the sensor unit 3 to be configured to transmit a signal having a sufficient radio wave intensity and communication distance. This ensures that the wear data signal transmitted from the sensor unit 3 is received by the receiver unit 4, which is arranged on the vehicle body.
(4) The sensor unit 3 and the receiver unit 4 forming the tire pressure monitoring device, which has become popularly used in vehicles, also function as elements of the tire wear detection device. Thus, just the wear detector 2 that is embedded in the tread 7 needs to be added to detect the wear state of the tread 7. This simplifies and minimizes the cost of the tire wear detection device.
(5) The wear detector 2 has a simple structure and is inexpensive since it is formed by standard components such as the piezoelectric element 11 and the resonance circuit 12. Further, the signal (second signal) transmitted from the RF transmission circuit 24 of the sensor unit 3 has a frequency that differs from the frequency of the radio wave signal (first signal) generated by the wear detector 2. More specifically, the signal transmitted from the RF transmission circuit 24 is an RF signal that can be stably communicated over a relatively long distance. This improves the reliability of communication between the sensor unit 3 and the receiver unit 4.
(6) The wear detector 2 is embedded in the tread 7 so that the distal end of the detection piece 14 becomes exposed from the outer surface of the tread 7 when the tread 7 is worn to the tolerable limit (position indicated by the broken line in Fig.2). When the distal end of the detection piece 14 of the wear detector 2 is exposed from the outer surface of the tread 7, the impact the distal end of the detection piece 14 receives from the road surface greatly increases and the intensity of the radio wave signal generated by the wear detector 2 also greatly increases as compared to when the distal end is unexposed. This allows for the receiver unit 4 to accurately determine that the tread 7 has worn to the tolerable limit based on significant changes in the radio wave intensity.
(7) The receiver unit 4 transmits a command signal from each LF transmission circuit 31 to the corresponding sensor unit 3 so that the sensor unit 3 operates in the wear detection mode when the vehicle 1 is traveling in the predetermined low speed range. The wear state of the tread 7 is thus detected when the traveling speed of the vehicle 1 is in the range in which the wear state of the tread 7 can be detected correctly.

It should be apparent to those skilled in the art that the present invention may be embodied in many other specific forms without departing from the spirit or scope of the invention. Particularly, it should be understood that the present invention may be embodied in the following forms.

A plurality of (e.g., two or three) wear detectors 2 may be arranged in predetermined intervals along the circumferential direction of the tire 6. The plurality of wear detectors 2 detect the wear state of the tread 7 with further accuracy. Further, the receiver unit 4 may determine whether or not the received RF signal is a correct wear data signal based on the reception cycle of the RF signal (e.g., reception pattern of the RF signals for each rotation of the tire). In the determination, the rotation speed of the tire 6 is used. The rotation speed is obtained from the vehicle speed signal of the vehicle speed sensor 39. Such determination may also be made in the above-discussed embodiment in which just one wear detector 2 is arranged in the tire 6 by checking with the receiver unit 4 whether or not the RF signal is received once for each rotation of the tire.

A rotation sensor for detecting the rotation speed of the tire 6 may be used in place of the vehicle speed sensor 39 to recognize the rotation speed of the tire 6 and the vehicle speed.

As shown in Fig. 5, the wear detector 2 may be embedded in a wear bar 10, which is arranged in a tread groove 8 of the tire 6. In this case, the wear detector 2 is embedded in the tread 7 so that the distal end of the detection piece 14 is flush with the surface of the wear bar 10 or slightly lower than the surface of the wear bar 10.

The wear data signal transmitted from the sensor unit 3 is not limited to information related to the intensity of the received radio signal and may include any information as long as the information indicates the wear state (extent of wear) of the tread 7.

The generation and transmission of the wear data signal in the sensor unit 3 may be changed in any manner. For example, the sensor unit 3 may generate and transmit the wear data signal only when receiving a radio wave signal having an intensity that is higher than or equal to a predetermined level. The sensor unit controller 23 may determine whether or not the intensity of the radio wave signal is higher than or equal to the predetermined level. Alternatively, the LF reception circuit 25 may be configured to respond only to a radio wave signal having an intensity that is higher than or equal to the predetermined level. The predetermined level corresponds to the intensity of the radio wave signal generated when the distal end of the detection piece 14 is exposed from the outer surface of the tread 7 due to wear of the tread 7. In this case, the receiver unit 4 determines that the extent of wear of the tread 7 has become greater than the tolerable limit when receiving the wear data signal. This reduces the control load because the receiver unit 4 does not need to determine the intensity of the radio wave signal.

As shown by the broken line in Fig.1, an operation switch 40 serving as an operation unit operable by a vehicle occupant may be arranged in the vehicle 1. The operation switch 40 is operated to switch the operation mode of the receiver unit 4 between a transmission permission mode, which permits the transmission of the command signal (start signal and stop signal), and a transmission prohibition mode, which prohibits the transmission of the command signal. In this manner, the switching of the sensor units 3 to the wear detection mode may be stopped when the vehicle 1 is traveling at the predetermined low speed range. The wear state of the tread 7 does not greatly change within a short period, and the wear state does not need to be checked so frequently. Thus, it is sufficient that the receiver unit 4 be able to switch to the transmission permission mode, which permits each sensor unit 3 to switch to the wear detection mode, only when there is a need to check the wear state.

The command signal (start signal and stop signal) may be transmitted to the receiver unit 4 in accordance with the operation of the operation switch 40. The receiver unit 4 may automatically transmit the stop signal when a predetermined time elapses from when the start signal is transmitted in accordance with the operation of the operation switch 40. This allows for occasional checking of the wear state of the tread 7.

In the above-discussed illustrated embodiment, the receiver unit 4 includes four LF transmission circuits 31 respectively corresponding to the four wheels 5. However, just at least one (or two) LF transmission circuit 31 is sufficient. When there is just one LF transmission circuit 31, the receiver unit 4 transmits the command signal including the ID code for each sensor unit 3 from the single LF transmission circuit 31. Each sensor unit 3 performs the operation corresponding to the command signal when receiving the command signal, which includes its ID code.

The radio wave signal generated by the wear detector 2 does not have to be an LF signal and may be a signal that is in a frequency band other than the LF band, such as a signal in the VHF or UHF band, as long as it can be stably received by the sensor unit 3. The wear data signal transmitted from the sensor unit 3 does not have to be an RF signal and may be a signal that is in a frequency band other than the VHF and UHF bands, such as a signal in the LF band, as long as it can be stably received by the receiver unit 4. It is only required that the sensor units 3 in the tire pressure monitoring device be used as relays for transmitting the signals generated by the wear detectors 2 to the receiver unit 4, which is arranged on the vehicle body. Otherwise, a signal of any frequency band may be used for the communication between the wear detector 2 and the sensor unit 3 and the communication between the sensor unit 3 and the receiver unit 4.

The display 38 does not have to be dedicated to showing information related to the state of the tire 6 (internal air pressure, internal temperature, wear state). A display that shows other information, such as the display for car navigation system or a vehicle speed display, may be used as the display 38. In this case, as shown by a broken line in Fig. 1, a display switch 41 serving as a switching unit operable by the passenger of the vehicle 1 may be used to show the state of the tire 6 on part of the display. In this case, when an abnormality in the internal air pressure or the internal temperature is detected or when the tread 7 is worn to the tolerable limit, such states may be immediately shown on the display regardless of operation of the display switch 41.

The present examples and embodiments are to be considered as illustrative and not restrictive, and the invention is not to be limited to the details given herein, but may be modified within the scope of the appended claims.

## Claims

1. A tire wear detection device comprising:
a wear detector (2) that detects wear of a tread (7) of a tire (6), which is fitted to a wheel (5) of a vehicle (1), wherein the wear detector (2) is embedded in the tread (7) and includes a piezoelectric element (11), which generates a voltage signal in correspondence with an external impact, and a signal generator (12), which generates a radio wave signal from the voltage signal generated by the piezoelectric element (11); and
a receiver unit (4) arranged on a body of the vehicle (1),
the tire wear detection device being **characterized by**
a sensor unit (3) arranged on the wheel (5), wherein the sensor unit (3) includes
a pressure sensor (21), which detects an internal air pressure of the tire (6),
a reception unit (25), which receives the radio wave signal generated by the signal generator (12), and
a transmission unit (24), which transmits through wireless communication a pressure data signal indicating the internal air pressure detected by the pressure sensor (21), generates a wear data signal indicating a wear state of the tire (6) based on the radio wave signal received by the reception unit (25), and transmits through wireless communication the wear data signal; and
wherein the receiver unit (4) receives the pressure data signal and the wear data signal from the sensor unit (3).

2. The tire wear detection device according to claim 1, wherein:
the signal generator (12) includes a resonance circuit that acquires a first signal having a first frequency as the radio wave signal from the voltage signal generated by the piezoelectric element (11); and
the transmission unit (24) generates a second signal having a second frequency differing from the first frequency based on the radio wave signal and transmits the second signal as the wear data signal.

3. The tire wear detection device according to claim 1 or 2, wherein:
the wear detector (2) includes a detection piece (14) mechanically coupled to the piezoelectric element (11); and
the wear detector (2) is embedded in the tread (7) so that a distal end of the detection piece (14) becomes exposed from an outer surface of the tread (7) when the tread (7) is worn to a tolerable limit.

4. The tire wear detection device according to any one of claims 1 to 3, wherein:
the receiver unit (4) includes a transmission unit (31) that transmits a start signal to the reception unit (25) of the sensor unit (3); and
the sensor unit (3) switches to a wear detection mode, which permits the transmission of the wear data signal, in response to the start signal received by the reception unit (25).

5. The tire wear detection device according to claim 4, wherein the receiver unit (4) transmits the start signal from the transmission unit (31) so that the sensor unit (3) operates in the wear detection mode when the vehicle (1) is traveling in a predetermined speed range.

6. The tire wear detection device according to any one of claims 1 to 5, wherein the wear detector (2) is one of a plurality of wear detectors (2) arranged at predetermined intervals along a circumferential direction of the tire (6).

7. The tire wear detection device according to any one of claims 1 to 6, wherein the wear detector (2) is arranged at a position substantially aligned with the sensor unit (3) in a radial direction of the tire (6).

8. The tire wear detection device according to any one of claims 1 to 7, wherein the receiver unit (4) determines whether or not a received signal is a correct wear data signal based on a reception cycle of the signal when the vehicle (1) is traveling.

9. The tire wear detection device according to any one of claims 1 to 8, wherein:
the transmission unit (24) of the sensor unit (3) transmits the wear data signal as a signal indicating intensity of the radio wave signal received by the reception unit (25); and
the receiver unit (4) determines the intensity of the radio wave signal based on the received wear data signal and determines a wear state of the tire (6) based on the determination of the intensity.

10. The tire wear detection device according to any one of claims 1 to 8, wherein:
the transmission unit (24) of the sensor unit (3) transmits the wear data signal only when the radio wave signal received by the reception unit (25) has an intensity that is higher than or equal to a predetermined level; and
the receiver unit (4) determines that wear of the tire (6) has exceeded a tolerable limit when receiving the wear data signal.

11. The tire wear detection device according to any one of claims 1 to 10, wherein:
the radio wave signal is a longwave band signal; and
the wear data signal is a high frequency signal.

## Patentansprüche

1. Reifenverschleißerkennungsvorrichtung, umfassend:
einen Verschleißerkenner (2), der den Verschleiß einer Lauffläche (7) eines Reifens (6) erkennt, der an einem Rad (5) eines Fahrzeugs (1) angebracht ist, wobei der Verschleißerkenner (2) in der Lauffläche (7) eingebettet ist und ein piezoelektrisches Element (11) aufweist, das ein Spannungssignal entsprechend einem äußeren Einfluss erzeugt, und einen Signalgeber (12), der ein Funkwellensignal aus dem Spannungssignal, das von dem piezoelektrischen Element (11) erzeugt wird, erzeugt, und
eine Empfängereinheit (4), die an einer Karosserie des Fahrzeugs (1) angeordnet ist,
wobei die Reifenverschleißerkennungsvorrichtung **gekennzeichnet ist durch**:
eine Sensoreinheit (3), die an dem Rad (5) angeordnet ist, wobei die Sensoreinheit (3) Folgendes aufweist:
einen Drucksensor (21), der einen Innenluftdruck des Reifens (6) erfasst,
eine Empfangseinheit (25), die das Funkwellensignal empfängt, das von dem Signalgeber (12) erzeugt wird, und
eine Übertragungseinheit (24), die über drahtlose Kommunikation ein Druckdatensignal, das den Innenluftdruck angibt, der von dem Drucksensor (21) erfasst wird, überträgt, ein Verschleißdatensignal, das einen Verschleißzustand des Reifens (6) angibt, anhand des Funkwellensignals erzeugt, das von der Empfangseinheit (25) empfangen wird, und über drahtlose Kommunikation das Verschleißdatensignal überträgt, und
wobei die Empfängereinheit (4) das Druckdatensignal und das Verschleißdatensignal von der Sensoreinheit (3) empfängt.

2. Reifenverschleißerkennungsvorrichtung nach Anspruch 1, wobei:
der Signalgeber (12) einen Schwingkreis aufweist, der ein erstes Signal, das eine erste Frequenz aufweist, als das Funkwellensignal aus dem Spannungssignal erfasst, das von dem piezoelektrischen Element (11) erzeugt wird, und
die Übertragungseinheit (24) ein zweites Signal, das eine zweite Frequenz aufweist, die sich von der ersten Frequenz unterscheidet, anhand des Funkwellenssignals erzeugt und das zweite Signal als das Verschleißdatensignal überträgt.

3. Reifenverschleißerkennungsvorrichtung nach Anspruch 1 oder 2, wobei:
der Verschleißerkenner (2) ein Erkennungsteil (14) aufweist, das mechanisch mit dem piezoelektrischen Element (11) gekoppelt ist, und
der Verschleißerkenner (2) in der Lauffläche (7) eingebettet ist, sodass ein distales Ende des Erkennungsteils (14) von einer Außenseite der Lauffläche (7) aus freigelegt wird, wenn die Lauffläche (7) bis an eine Zulässigkeitsgrenze verschlissen ist.

4. Reifenverschleißerkennungsvorrichtung nach einem der Ansprüche 1 bis 3, wobei:
die Empfängereinheit (4) eine Übertragungseinheit (31) aufweist, die ein Startsignal an die Empfangseinheit (25) der Sensoreinheit (3) überträgt, und
die Sensoreinheit (3) als Reaktion auf das Startsignal, das von der Empfangseinheit (25) empfangen wird, in einen Verschleißerkennungsmodus umschaltet, der die Übertragung des Verschleißdatensignals ermöglicht.

5. Reifenverschleißerkennungsvorrichtung nach Anspruch 4, wobei die Empfängereinheit (4) das Startsignal von der Übertragungseinheit (31) überträgt, sodass die Sensoreinheit (3) im Verschleißerkennungsmodus arbeitet, wenn das Fahrzeug (1) in einem festgelegten Geschwindigkeitsbereich fährt.

6. Reifenverschleißerkennungsvorrichtung nach einem der Ansprüche 1 bis 5, wobei der Verschleißerkenner (2) einer aus mehreren Verschleißerkennern (2) ist, die in festgelegten Abständen entlang einer Umfangsrichtung des Reifens (6) angeordnet sind.

7. Reifenverschleißerkennungsvorrichtung nach einem der Ansprüche 1 bis 6, wobei der Verschleißerkenner (2) an einer Position angeordnet ist, die in einer radialen Richtung des Reifens (6) im Wesentlichen nach der Sensoreinheit (3) ausgerichtet ist.

8. Reifenverschleißerkennungsvorrichtung nach einem der Ansprüche 1 bis 7, wobei die Empfängereinheit (4) anhand eines Empfangszyklus des Signals, wenn das Fahrzeug (1) fährt, bestimmt, ob ein empfangenes Signal ein korrektes Verschleißdatensignal ist oder nicht.

9. Reifenverschleißerkennungsvorrichtung nach einem der Ansprüche 1 bis 8, wobei:
die Übertragungseinheit (24) der Sensoreinheit (3) das Verschleißdatensignal als ein Signal überträgt, das die Stärke des Funkwellensignals, das von der Empfangseinheit (25) empfangen wird, angibt, und
die Empfängereinheit (4) die Stärke des Funkwellensignals anhand des empfangenen Verschleißdatensignals bestimmt und einen Verschleißzustand des Reifens (6) anhand der Bestimmung der Stärke bestimmt.

10. Reifenverschleißerkennungsvorrichtung nach einem der Ansprüche 1 bis 8, wobei:
die Übertragungseinheit (24) der Sensoreinheit (3) das Verschleißdatensignal nur dann überträgt, wenn das Funkwellensignal, das von der Empfangseinheit (25) empfangen wird, eine Stärke aufweist, die höher ist als ein bestimmtes Niveau oder einem bestimmten Niveau entspricht, und
die Empfängereinheit (4) bestimmt, dass der Verschleiß des Reifens (6) eine Zulässigkeitsgrenze überschritten hat, wenn sie das Verschleißdatensignal empfängt.

11. Reifenverschleißerkennungsvorrichtung nach einem der Ansprüche 1 bis 10, wobei:
das Funkwellensignal ein Langwellenbereich-Signal ist, und
das Verschleißdatensignal ein Hochfrequenzsignal ist.

## Revendications

1. Dispositif de détection d'usure de pneu, comprenant :
un détecteur d'usure (2) qui détecte l'usure d'une bande de roulement (7) d'un pneu (6), qui est monté sur une roue (5) d'un véhicule (1), dans lequel le détecteur d'usure (2) est incorporé dans la bande de roulement (7) et comprend un élément piézoélectrique (11), qui génère un signal de tension en correspondance avec un impact externe, et un générateur de signaux (12), qui génère un signal d'ondes radioélectriques à partir du signal de tension généré par l'élément piézoélectrique (11) ; et
une unité réceptrice (4) agencée sur une carrosserie du véhicule (1),
le dispositif de détection d'usure de pneu étant **caractérisé par**
une unité de capteur (3) agencée sur la roue (5), dans lequel l'unité de capteur (3) comprend
un capteur de pression (21), qui détecte une pression d'air interne du pneu (6),
une unité de réception (25), qui reçoit le signal d'ondes radioélectriques généré par le générateur de signaux (12), et
une unité de transmission (24) qui transmet par communication sans fil un signal de données de pression indiquant la pression d'air interne détectée par le capteur de pression (21), génère un signal de données d'usure indiquant un état d'usure du pneu (6) basé sur le signal d'ondes radioélectriques reçu par l'unité de réception (25), et transmet par communication sans fil le signal de données d'usure ; et
dans lequel l'unité réceptrice (4) reçoit le signal de données de pression et le signal de données d'usure de l'unité de capteur (3).

2. Dispositif de détection d'usure de pneu selon la revendication 1, dans lequel :
le générateur de signaux (12) comprend un circuit résonnant qui acquiert un premier signal présentant une première fréquence en tant que signal d'ondes radioélectriques à partir du signal de tension généré par l'élément piézoélectrique (11) ; et
l'unité de transmission (24) génère un second signal présentant une seconde fréquence différente de la première fréquence basé sur le signal d'ondes radioélectriques et transmet le second signal en tant que signal de données d'usure.

3. Dispositif de détection d'usure de pneu selon la revendication 1 ou 2, dans lequel :
le détecteur d'usure (2) comprend une pièce de détection (14) couplée mécaniquement à l'élément piézoélectrique (11) ; et
le détecteur d'usure (2) est incorporé dans la bande de roulement (7) de sorte qu'une extrémité distale de la pièce de détection (14) devient exposée à partir d'une surface extérieure de la bande de roulement (7) quand la bande de roulement (7) est usée jusqu'à une limite tolérable.

4. Dispositif de détection d'usure de pneu selon l'une quelconque des revendications 1 à 3, dans lequel :
l'unité réceptrice (4) comprend une unité de transmission (31) qui transmet un signal de départ à l'unité de réception (25) de l'unité de capteur (3) ; et
l'unité de capteur (3) commute en un mode de détection d'usure, qui permet la transmission du signal de données d'usure, en réaction au signal de départ reçu par l'unité de réception (25).

5. Dispositif de détection d'usure de pneu selon la revendication 4, dans lequel l'unité réceptrice (4) transmet le signal de départ de l'unité de transmission (31) de sorte que l'unité de capteur (3) fonctionne en mode de détection d'usure quand le véhicule (1) roule dans une plage de vitesse prédéterminée.

6. Dispositif de détection d'usure de pneu selon l'une quelconque des revendications 1 à 5, dans lequel le détecteur d'usure (2) est l'un d'une pluralité de détecteurs d'usure (2) agencés à des intervalles prédéterminés le long d'une direction circonférentielle du pneu (6).

7. Dispositif de détection d'usure de pneu selon l'une quelconque des revendications 1 à 6, dans lequel le détecteur d'usure (2) est agencé dans une position essentiellement alignée avec l'unité de capteur (3) dans une direction radiale du pneu (6).

8. Dispositif de détection d'usure de pneu selon l'une quelconque des revendications 1 à 7, dans lequel l'unité réceptrice (4) détermine si un signal reçu est un signal de données d'usure correct ou non en se basant sur un cycle de réception du signal quand le véhicule (1) roule.

9. Dispositif de détection d'usure de pneu selon l'une quelconque des revendications 1 à 8, dans lequel :
l'unité de transmission (24) de l'unité de capteur (3) transmet le signal de données d'usure en tant qu'un signal indiquant l'intensité du signal d'ondes radioélectriques reçu par l'unité de réception (25) ; et
l'unité réceptrice (4) détermine l'intensité du signal d'ondes radioélectriques en se basant sur le signal de données d'usure reçu et détermine un état d'usure du pneu (6) en se basant sur la détermination de l'intensité.

10. Dispositif de détection d'usure de pneu selon l'une quelconque des revendications 1 à 8, dans lequel :
l'unité de transmission (24) de l'unité de capteur (3) transmet le signal de données d'usure uniquement quand le signal d'ondes radioélectriques reçu par l'unité de réception (25) présente une intensité qui est supérieure ou égale à un niveau prédéterminé ; et
l'unité réceptrice (4) détermine que l'usure du pneu (6) a dépassé une limite tolérable quand elle reçoit le signal de données d'usure.

11. Dispositif de détection d'usure de pneu selon l'une quelconque des revendications 1 à 10, dans lequel :
le signal d'ondes radioélectriques est un signal dans la bande des grandes ondes ; et
le signal de données d'usure est un signal haute fréquence.
